# EUROPEAN PATENT APPLICATION

(11) **EP 4 715 002 A1**
(43) Date of publication of application: **25.03.2026**
(21) Application number: 24807103.7
(22) Date of filing: 08.05.2024
(51) Int. Cl.: C08J 5/18, B05D 5/06, B05D 7/24, B32B 27/20, B32B 27/30, H01Q 1/42

(54) **METAL-TONE DECORATIVE MULTILAYER BODY, METAL-TONE ARTICLE, AND METHOD FOR PRODUCING METAL-TONE DECORATIVE MULTILAYER BODY**

(30) Priority: 16.05.2023 JP 2023080998
(71) Applicant: Wavelock Advanced Technology Co., Ltd, Tokyo 104-0044 (JP)
(72) Inventor: HOSHI, Kenta, Koga-shi, Ibaraki 306-0204 (JP)
(74) Representative: Kraus & Lederer PartGmbB
(86) International application number: PCT/JP2024/017185
(87) International publication number: WO 2024/237151

(57) **Abstract**

There are provided a metallic decorative laminate including a lustrous resin layer that contains a resin component containing one or two or more fluororesins and one or two or more acrylic resins and that contains one or two or more lustrous materials, the lustrous resin layer having a layer thickness of 20 µm or more and 100 µm or less, and thus the metallic decorative laminate exhibits an excellent metallic design and excellent millimeter-wave transparency and is easily manufactured; a metallic article including the metallic decorative laminate; and a method for manufacturing the metallic decorative laminate.

## Description

### Technical Field

The present invention relates to a metallic decorative laminate, a metallic article, and a method for manufacturing a metallic decorative laminate.

### Background Art

Sensors, such as millimeter-wave radars, are used to detect obstacles around vehicles, such as automobiles. Such a millimeter-wave radar is a device that emits radio waves with a wavelength of 1 to 10 mm toward an obstacle, measures the time it takes for the waves to reflect back from the obstacle, and calculates the distance to the obstacle. Millimeter-wave radars are less affected by weather conditions, such as rain and fog, and can detect distant obstacles; therefore, they have been used by many automakers. In automotive millimeter-wave radar, the 76 to 77 GHz band is used. The main body of the millimeter-wave radar is mounted, for example, behind the front or rear bumper of a vehicle body. Millimeter waves pass through the bumper from the main body and are directed toward obstacles. Typically, automotive bumpers are manufactured by applying a coating to molded components made of resins, such as polypropylene or polycarbonate. In automobiles with metallic coatings on their bodies, the bumpers are also required to have a metallic appearance and millimeter-wave transparency (Patent Literature 1).

### Citation List

### Patent Literature

PTL 1: Japanese Unexamined Patent Application Publication No. 2010-030075

### Summary of Invention

### Technical Problem

The present invention aims to provide a metallic decorative laminate that exhibits an excellent metallic design and excellent transmittance for radio waves classified as millimeter waves (hereinafter, referred to as millimeter-wave transparency) and that is easily manufactured, a metallic article including the metallic decorative laminate, and a method for manufacturing the metallic decorative laminate.

### Solution to Problem

To solve the above problems, the inventor has conducted intensive studies and provides the following [1] to [3].
[1] A metallic decorative laminate includes a lustrous resin layer that contains a resin component containing one or two or more fluororesins and one or two or more acrylic resins and that contains one or two or more lustrous materials, wherein the lustrous resin layer has a layer thickness of 20 µm or more and 100 µm or less.
[2] A metallic article includes the metallic decorative laminate described in [1].
[3] A method for manufacturing the metallic decorative laminate described in [1] includes, in sequence, applying a coating liquid containing a fluororesin, an acrylic resin, and a lustrous material to a substrate, and performing heating.

### Advantageous Effects of Invention

According to the present invention, it is possible to provide a metallic decorative laminate that exhibits an excellent metallic design and excellent millimeter-wave transparency and that is easily manufactured, a metallic article including the metallic decorative laminate, and a method for manufacturing the metallic decorative laminate.

### Brief Description of Drawings

[Fig. 1] Fig. 1 is a schematic view of a metallic decorative laminate of the present embodiment.
[Fig. 2] Fig. 2 is a schematic view of an electromagnetic wave-transmitting lustrous coating resin product (three layers laminated) described in Patent Literature 1.
[Fig. 3] Fig. 3 is a schematic view of a lustrous material in a lustrous resin layer.

### Description of Embodiments

Patent Literature 1 described above discloses a method for manufacturing an aluminum-like bumper that transmits millimeter waves, the method including applying a coating containing flat, lustrous material made of aluminum (aluminum flakes) to a resin substrate. In a method for expressing a metallic design using aluminum flakes, the millimeter waves are reflected from the aluminum flakes. To inhibit this reflection and improve millimeter-wave transparency, a method for increasing the distance between aluminum flakes has been known (Patent Literature 1). However, in the method described in Patent Literature 1, if the thickness of the lustrous resin layer that can be produced by applying a single coat of the coating is more than 10 µm, the aluminum flakes settle in the coating film before the coating film hardens. This fails to ensure a sufficient distance between the aluminum flakes and to sufficiently inhibit the reflection.

In Patent Literature 1, a sufficient amount of aluminum flakes is required for the lustrous resin layer to express a metallic design. To achieve this, if the amount of aluminum flakes contained in the lustrous resin layer is increased, the distance between the aluminum flakes is smaller, thus reducing millimeter-wave transparency.

To express a metallic design, it is preferable to have a thickness of at least a certain level. However, in the method for manufacturing a lustrous resin layer described in Patent Literature 1, the aluminum flakes settle in the coating film as described above. Therefore, in order to ensure a sufficient distance between the aluminum flakes, the layer needs to be formed so as to have a thickness of 10 µm or less. Due to this restriction, a single lustrous resin layer having a thickness of 20 µm or more cannot be manufactured. To achieve a thickness of 20 µm or more, at least two lustrous resin layers need to be stacked. Thus, in order to obtain a lustrous resin layer having a layer thickness of 20 µm or more by the manufacturing method described in Patent Literature 1, the coating film formation step needs to be performed at least twice, making the process complicated.

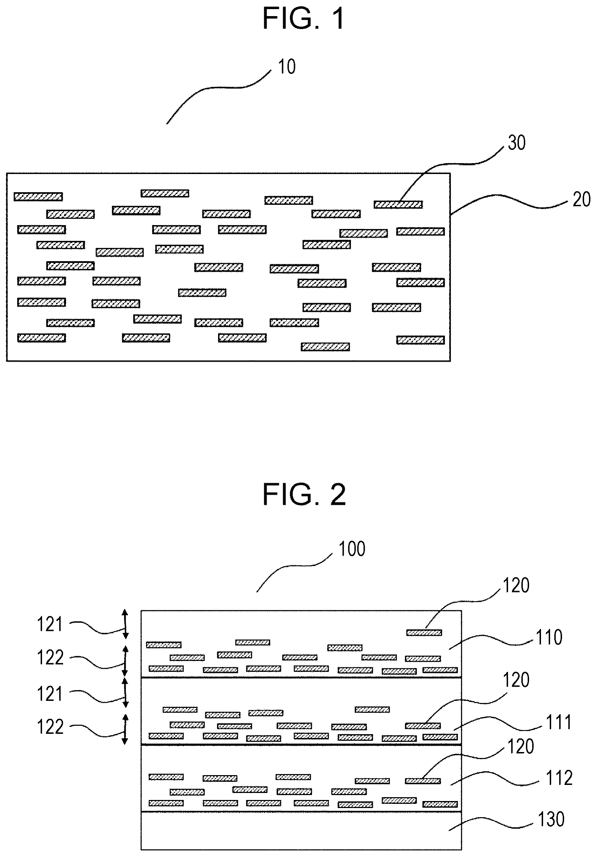

Furthermore, as described in Patent Literature 1, when the lustrous resin layer is manufactured using an acrylic urethane coating containing aluminum flakes, because the aluminum flakes are insoluble in the acrylic urethane coating and have low dispersibility, the aluminum flakes, which have a large specific gravity, settle during the manufacturing process due to the difference in specific gravity. This results in a distribution of the aluminum flake content of each lustrous resin layer in such a manner that the aluminum flake content increases from the upper surface toward the lower surface in the thickness direction (in Fig. 2, a region having a high lustrous material content, such as a region 122 having a high lustrous material content, is formed, in contrast to a region 121 having a low lustrous material content of a lustrous resin layer (1) 110). For this reason, for example, when the manufacture is performed by stacking three lustrous resin layers (see Fig. 2), aluminum flakes (lustrous material 120) settle on a resin substrate 130 side of each of the lustrous resin layers (each of the lustrous resin layers (1) to (3)) because of the difference in specific gravity to form the region 122 having a high aluminum flake content, thereby leading to deteriorations in design property and radio-wave transparency.

In contrast, the metallic decorative laminate of the present disclosure has excellent dispersibility of the lustrous material, and therefore the layer thickness of each lustrous resin layer can be increased. Furthermore, the thickness can be 20 µm or more without stacking multiple lustrous resin layers. Thus, a region having a high lustrous material content (such as the region 122 having a high lustrous material content of the lustrous resin layer (2) 111 in Fig. 2) is not formed therein. This makes it possible to obtain a metallic decorative laminate that exhibits an excellent metallic design (hereinafter, also referred to as an excellent design property) and has excellent millimeter-wave transparency.

In addition, in Patent Literature 1, the lustrous resin layer does not contain a component corresponding to the fluororesin of the present embodiment. Thus, there is room for improvement in terms of soil resistance and chemical resistance. In contrast, the metallic decorative laminate of the present disclosure has the lustrous resin layer containing the fluororesin and thus has excellent soil resistance and chemical resistance properties. Furthermore, when a metallic decorative laminate is formed on a substrate, the metallic decorative laminate can be easily peeled from the substrate (hereinafter, also referred to as releasability from the substrate), and therefore the metallic decorative laminate also has the characteristic of having excellent film formability.

A metallic decorative laminate, a metallic article, and a method for manufacturing the metallic decorative laminate according to the present invention will be described below. However, the present invention is not limited to the following examples.

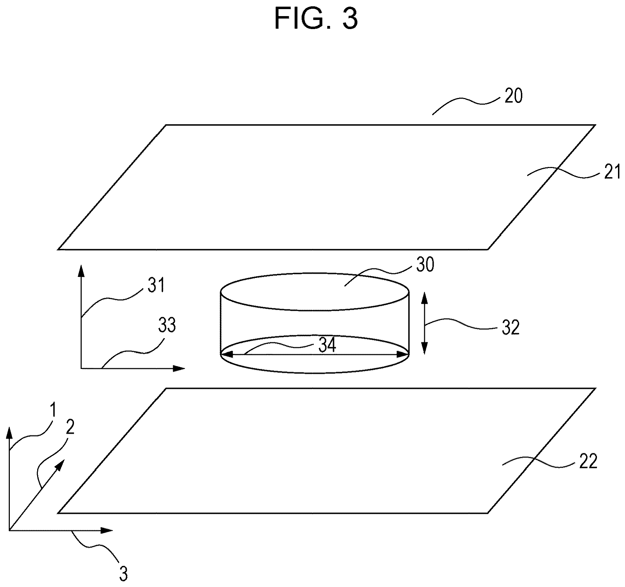

In the present disclosure, a thickness direction 1 refers to the stacking direction of the metallic decorative laminate or metallic article, as illustrated in Fig. 3. A width direction 2 refers to a direction different from the thickness direction and perpendicular to a longitudinal direction 3 of the metallic decorative laminate or metallic article.

An embodiment of the present disclosure (hereinafter, also referred to as "the present embodiment") will be described below. In the present disclosure, the numerical values related to "or more", "or less", "to", and the like in describing a numerical range are numerical values that can be freely combined.

Furthermore, provisions that are considered to be preferred may be used at will. That is, one provision that is considered to be preferred may be used in combination with one or more other provisions that are considered to be preferred. A combination of preferred provisions is more preferred.

### [Metallic Decorative Laminate]

The metallic decorative laminate of the present embodiment is required to be a metallic decorative laminate including a lustrous resin layer that contains a resin component containing one or two or more fluororesins and one or two or more acrylic resins and that contains one or two or more lustrous materials, the lustrous resin layer having a layer thickness of 20 µm or more and 100 µm or less.

The metallic decorative laminate of the present embodiment can be used to decorate resin components and metal components, such as automotive bumpers, (hereinafter, also referred to simply as "articles") by laminate decoration methods, such as insert molding and overlay molding, using the metallic decorative laminate. The metallic decorative laminate may be used to decorate the surface of an article with an adhesion layer or an adhesive layer interposed therebetween, and can be used as the surface layer of an automotive exterior, for example, an automotive pillar, a door molding, a roof molding, the entire door surface, or the entire roof surface. As described above, the metallic decorative laminate of the present embodiment, particularly when used to decorate resin components, such as automotive bumpers, exhibits an excellent metallic design and has excellent transparency to radio waves classified as millimeter waves (unless otherwise specified, hereinafter, in the present disclosure, radio waves refer to radio waves classified as millimeter waves). Thus, a millimeter-wave radar can be disposed directly below a bumper to detect target objects, which is preferred. Furthermore, as will be described in detail below, the metallic decorative laminate of the present embodiment is preferred because of its ease of manufacture and excellent mass productivity.

To improve the design property, the metallic decorative laminate of the present embodiment preferably has a layer thickness of 20 µm or more, more preferably 50 µm or more, and still more preferably 80 µm or more. To improve millimeter-wave transparency, the metallic decorative laminate preferably has a layer thickness of 250 µm or less, more preferably 200 µm or less, still more preferably 150 µm or less, even more preferably 120 µm or less, and particularly preferably 100 µm or less.

To keep a balance between the design property and the millimeter-wave transparency, the layer thickness is preferably 20 µm or more and 250 µm or less, more preferably 50 µm or more and 200 µm or less, and still more preferably 80 µm or more and 100 µm or less.

When the metallic decorative laminate is used for insert molding, the lustrous resin layer may be used together with a backer layer for the purpose of reinforcement. When the metallic decorative laminate of the present embodiment has a backer layer, the metallic decorative laminate preferably has a layer thickness of 300 µm or more and 600 µm or less, more preferably 400 µm or more and 550 µm or less, and still more preferably 450 µm or more and 520 µm or less.

The backer layer is preferably made of an ABS resin or a polypropylene resin, and preferably has a layer thickness of 250 µm or more and 400 µm or less.

In the present disclosure, the term "design property" refers to the property of an article to express a metallic design using the metallic decorative laminate of the present disclosure in the article.

The millimeter-wave transparency of the metallic decorative laminate of the present embodiment can be evaluated by the attenuation of radio waves of 76.5 GHz (hereinafter, referred to as millimeter-wave transmission loss, and the attenuation is expressed as an absolute value). To maintain a high level of detection sensitivity of a millimeter-wave radar when the metallic decorative laminate is used in conjunction with the millimeter-wave radar and disposed on the path of irradiation and reflection of the millimeter waves, the attenuation is preferably 1.0 dB or less, more preferably 0.5 dB or less. The lower limit is preferably, but not limited to, 0.0 dB. Attenuation occurs due to the resin component and the like; thus, the lower limit is practically 0.1 dB or more.

The total light transmittance of the metallic decorative laminate of the present embodiment can be adjusted as needed. As described below, the metallic decorative laminate of the present embodiment expresses the metallic design because of the lustrous material contained. From the viewpoint of expressing the design property, it is also preferable to adjust the color tone by adding a pigment or the like described below, as necessary.

The total light transmittance of the metallic decorative laminate of the present embodiment can be appropriately adjusted by the amount of the lustrous material contained, the shape of the lustrous material, and the amounts of the pigment and the like.

When no pigment is contained, or even if a pigment is contained, the amount thereof is small, the total light transmittance can be increased. This is preferred because it allows the metallic design to be expressed in the case where the external light is strong, for example, during the day when sunlight is present, and when the external light is weak, for example, at night, light from an LED or the like can be transmitted from the side opposite the viewer of the metallic decorative laminate, allowing the metallic design to be expressed even in the situation where the external light is weak. The total light transmittance is preferably 70% or more, more preferably 80% or more, still more preferably 90% or more, and even more preferably 98% or more. The upper limit is not particularly limited as long as the metallic decorative laminate of the present disclosure exhibits the characteristics of the metallic design and millimeter-wave transparency.

When the metallic design due to the lustrous material is more strongly expressed by increasing the lustrous material content, the total light transmittance is reduced, and the color of the article to which the metallic appearance is imparted is masked, making millimeter-wave irradiation devices mounted behind the bumpers on the front and rear sides of an automotive body invisible, which is preferred. To achieve such effects, the total light transmittance is preferably 5% or more, more preferably 10% or more, and still more preferably 15% or more. The upper limit is not particularly limited as long as the metallic design is imparted and the characteristics, such as millimeter-wave transparency, of the metallic decorative laminate of the present disclosure are exhibited. The upper limit is preferably 40% or less, more preferably 30% or less, still more preferably 20% or less, and even more preferably 10% or less. The color of the article may be substantially unrecognizable from the metallic decorative laminate side.

When a pigment or the like is contained in addition to the lustrous material, the absorption of millimeter waves by the pigment or the like is small and usually negligible.

The total light transmittance can be measured, for example, by a method described in examples.

The metallic decorative laminate of the present embodiment may include only the lustrous resin layer, but may also include other resin layers described below.

The metallic decorative laminate of the present embodiment may include two or more lustrous resin layers described below, but preferably includes only one layer. The metallic decorative laminate of the present embodiment is preferred because the layer thickness of the lustrous resin layer can be set to 20 µm or more, and the desired design property can be expressed with just one layer.

### <Lustrous Resin Layer>

The lustrous resin layer is required to contain a resin component containing one or two or more fluororesins and one or two or more acrylic resins, contain one or two or more lustrous materials, and have a layer thickness of 20 µm or more and 100 µm or less.

The lustrous resin layer may contain only the resin component and the lustrous material, but may also contain other components described below as the resin component.

The layer thickness of the lustrous resin layer is preferably 23 µm or more, more preferably 25 µm or more, and still more preferably 28 µm or more in order to improve the design property, and is preferably 80 µm or less, more preferably 60 µm or less, and still more preferably 50 µm or less in order to improve millimeter-wave transparency.

To keep a balance between the design property and millimeter-wave transparency, the layer thickness is preferably 23 µm or more and 80 µm or less, more preferably 25 µm or more and 60 µm or less, and still more preferably 28 µm or more and 50 µm or less.

When the lustrous resin layer is used as the outermost surface of the metallic decorative laminate, the surface may be embossed to give it various patterns, or may be provided with fine irregularities to give it a matte finish. A hairline finish may be applied to impart a hairline-like design.

### (Resin Component)

As described above, the lustrous resin layer contains the resin component containing one or two or more fluororesins and one or two or more acrylic resins, and contains one or two or more lustrous materials.

The resin component derived from one or two or more fluororesins and one or two or more acrylic resins may be a mixture (polymer alloy) of one or two or more fluororesins and one or two or more acrylic resins, or a reaction product of one or two or more fluororesins and one or two or more acrylic resins. However, in order to improve the strength of the metallic decorative laminate and the dispersibility of the lustrous material, the resin component is more preferably a mixture (polymer alloy) of one or two or more fluororesins and one or two or more acrylic resins.

The fluororesins are described in detail below. Only one type of fluororesin may be used, or a combination of two or more types thereof may be used. When only one type thereof is used, a uniform metallic decorative laminate can be easily manufactured, which is preferred. When two or more types thereof are used, the physical property values, such as the melting point, of the resin component can be easily adjusted, which is preferred.

The acrylic resins are described in detail below. Only one type of acrylic resin may be used, or a combination of two or more types may be used. When only one type is used, a uniform metallic decorative laminate can be easily manufactured, which is preferred. When two or more types are used, the physical property values, such as the melting point, of the resin component can be easily adjusted, which is preferred.

The resin component is a resin component derived from the fluororesins and the acrylic resins, described below, but may contain resins other than these. As the resins other than these, resins constituting the other resin layers described below are preferred. The amount of the fluororesins and the acrylic resins is preferably 80 parts or more by mass, more preferably 90 parts or more by mass, still more preferably 95 parts or more by mass, even more preferably 98 parts or more by mass, and yet even more preferably substantially 100 parts by mass, based on 100 parts by mass of the resin component. "Substantially" means that impurities and the like that are unintentionally contained are excluded. The upper limit is not particularly limited and is preferably substantially 100 parts by mass.

The resin component contained in the lustrous resin layer contains the fluororesins and the acrylic resins. The ratio of the amount of the fluororesins contained to the amount of the acrylic resins contained (the amount of the fluororesins contained/the amount of the acrylic raw resins contained) is preferably 1.0 or more and 5.0 or less, more preferably 1.1 or more and 2.5, still more preferably 1.2 or more and 2.0, and even more preferably 1.3 or more and 1.7.

When the amount of the fluororesins contained is larger than the amount of the acrylic resins contained, the dispersibility of the lustrous material described below is improved, the lustrous material is uniformly dispersed in the lustrous resin layer, and the design property and millimeter-wave transparency of the metallic decorative laminate are improved, which is preferred. Moreover, the releasability from the substrate is improved, resulting in easier manufacture, which is preferred.

The resin component preferably further contains other components described below.

The total amount of the fluororesins and the acrylic resins is preferably 90 parts or more by mass, more preferably 94 parts or more by mass, and still more preferably 96 parts or more by mass, based on a total of 100 parts by mass of the resin component, in order to increase the strength of the lustrous resin layer and the dispersibility of the lustrous material. The upper limit is not particularly limited and may be 100 parts by mass. When other components are added as necessary, the upper limit is preferably 99 parts or less by mass, more preferably 98 parts or less by mass.

### (Fluororesin)

Each of the fluororesins described above typically has excellent chemical resistance, weather resistance, and so forth. The use of the fluororesin as the resin component improves the releasability from the substrate, facilitating the manufacture of the metallic decorative laminate, in addition to the above-described characteristics. Furthermore, the dispersibility of the lustrous material in the lustrous resin layer is improved, resulting in a uniform lustrous resin layer that exhibits an excellent metallic design and excellent millimeter-wave transparency. In order to utilize these characteristics, it can be used as the outermost surface of the metallic decorative laminate of the present embodiment.

As the fluororesins described above, fluororesins that are commonly used can be used. Preferred examples thereof include polytetrafluoroethylene (PTFE), polychlorotrifluoroethylene (CTFE), polyvinylidene fluoride (PVDF), polyvinyl fluoride (PVF), perfluoroalkoxy alkane (PFA), a tetrafluoroethylene-hexafluoropropylene copolymer (FEP), an ethylene-tetrafluoroethylene copolymer (ETFE), and an ethylene-chlorotrifluoroethylene copolymer (ECTFE). In particular, polyvinylidene fluoride (PVDF) is preferred as the resin component because it provides a lustrous resin layer having excellent film formability and excellent dispersibility of the lustrous material.

To facilitate the formation of a polymer alloy with the acrylic resins described below, the mass-average molecular weight (Mw) of each of the fluororesins is preferably 800 or more and 5,000 or less, more preferably 1,000 or more and 3,000 or less, still more preferably 1,300 or more and 2,000 or less, and even more preferably 1,500 or more and 1,700 or less.

To facilitate the formation of a polymer alloy with the acrylic resins described below, the polydispersity (Mw/Mn) of each of the fluororesins is preferably 0.5 or more and 5.0 or less, more preferably 0.8 or more and 2.5 or less, still more preferably 1.0 or more and 1.8 or less, and even more preferably 1.2 or more and 1.4 or less.

### (Acrylic Resin)

As the acrylic resins described above, acrylic resins that are commonly used can be used, such as polymers and copolymers of acrylic acid and its derivatives, e.g., esters, and methacrylic acid derivatives, e.g., methyl methacrylate. More specifically, preferred examples thereof include polyethyl methacrylate (PEMA), polybutyl methacrylate (PBMA), polycyclohexyl methacrylate (PCHMA), and polyethylhexyl methacrylate (PEHMA). In particular, a polymethyl methacrylate resin (PMMA) is useful when used as a resin component because it has high transparency and excellent scratch resistance due to its high hardness, and furthermore, is thermoplastic and can be processed into complex shapes.

To facilitate the formation of a polymer alloy with the fluororesins, the mass-average molecular weight (Mw) of each of the acrylic resins is preferably 30,000 or more and 500,000 or less, more preferably 50,000 or more and 300,000 or less, still more preferably 70,000 or more and 200,000 or less, and even more preferably 90,000 or more and 100,000 or less.

To facilitate the formation of a polymer alloy with the fluororesins, the polydispersity (Mw/Mn) of each of the acrylic resins is preferably 1.5 or more and 5.0 or less, more preferably 1.6 or more and 4.0 or less, still more preferably 1.7 or more and 3.0 or less, and even more preferably 1.9 or more and 2.2 or less.

The glass transition temperature (Tg) of each of the acrylic resins is preferably 100°C or higher, more preferably 108°C or higher, still more preferably 115°C or higher, and even more preferably 117°C or higher, in order to more uniformly form a resin component with the fluororesin and to inhibit the crystallinity of the fluororesin.

The upper limit of Tg is not particularly limited. From the viewpoint of workability, the upper limit is preferably 150°C or lower, more preferably 140°C or lower, still more preferably 130°C or lower, and even more preferably 125°C or lower.

Each of the acrylic resins preferably contains an imide skeleton in its structure in order to achieve the Tg range described above.

### <<Lustrous Material>>

The lustrous material is not particularly limited as long as it is dispersed in the resin composition, reflects external light (incident light), imparts metallic luster to the lustrous resin layer, and is contained to express the design property of the metallic decorative laminate. The lustrous material may be an inorganic pigment or an organic pigment. The lustrous material may be a natural material or a synthetic material. In order to improve reflectivity to external light, the lustrous material is preferably an inorganic pigment.

The lustrous material preferably contains at least one material selected from scale-like or flake-like metals, scale-like or flake-like alloys, scale-like or flake-like metal oxides, scale-like or flake-like micas, glass flakes, and pulverized film pieces. Any material may be used as long as it exhibits luster when contained in the resin composition. From the viewpoints of ease of availability, an improvement in the design property, and so forth, scale-like or flake-like metals, scale-like or flake-like micas, or pulverized film pieces are more preferred. Scale-like or flake-like metals or scale-like or flake-like micas are still more preferred. Scale-like or flake-like metals are even more preferred.

The above-described scale-like or flake-like metals are particles of metal powders formed into thin flakes. As the metals, metals that are usually used for scale-like or flake-like metals are preferably used. More preferred examples include aluminum, iron, copper, nickel, zinc, gold, silver, oxides of these metals, and alloys containing these metals. Examples of such a scale-like or flake-like metal include aluminum flakes, stainless-steel flakes, copper flakes, and nickel flakes. In order to obtain a metallic decorative laminate having an excellent metallic design property, the scale-like or flake-like metal is preferably formed of flakes of aluminum or an alloy thereof, more preferably aluminum flakes.

Examples of the scale-like or flake-like micas include white pearlescent pigments, interference pearlescent pigments, and colored pearlescent pigments. The flake-like micas can be used alone, but it is preferable to use them in combination with colorants described below to express a wider range of color tones.

The white pearlescent pigment is a scale-like base material, such as mica, aluminum, or glass, covered with a coating layer made of a colorless, high-refractive-index material, such as titanium dioxide. The layer thickness of the coating layer is preferably about 0.1 µm or more and about 0.15 µm or less.

The interference pearlescent pigment has a coating layer made of a colorless, high-refractive-index material, such as titanium dioxide. The layer thickness of the coating layer is preferably more than 0.15 µm.

Preferably, the lustrous material is uniformly dispersed in the resin component within a lustrous resin layer 20 in Fig. 3 and is oriented in such a manner that the thickness direction 31 of the lustrous material is substantially parallel to the thickness direction 1. In Fig. 3, the lustrous material is depicted in a disk shape, but is not limited thereto. The longest dimension in the planar direction of the lustrous material 30 (particle-diameter direction 33 of the lustrous material) is defined as the particle diameter 34 of the lustrous material. The average thickness of the lustrous material in the thickness direction perpendicular to the planar direction is defined as the thickness 32 of the lustrous material. These values are average values determined by randomly sampling 20 pieces of the lustrous material and measuring them under an optical microscope. The particle diameter 34 of the lustrous material can be substituted with the volume-average particle diameter (D₅₀) described in examples. To ensure ease of availability and express the metallic design property, the particle diameter 34 (D₅₀) of the lustrous material is preferably 3 µm or more, more preferably 4 µm or more, and still more preferably 5 µm or more. To increase the amount of transmitted light and improve the chemical resistance and weather resistance, the particle diameter 34 (D₅₀) is preferably 50 µm or less, more preferably 30 µm or less, still more preferably 20 µm or less, even more preferably 15 µm or less, and yet even more preferably 10 µm or less.

To keep a balance between the chemical resistance, weather resistance, design property, and formability, the particle diameter is preferably 3 µm or more and 50 µm or less, more preferably 3 µm or more and 30 µm or less, still more preferably 4 µm or more and 20 µm or less, even more preferably 4 µm or more and 15 µm or less, and yet even more preferably 5 µm or more and 10 µm or less.

To achieve good chemical resistance, weather resistance, design property, and formability, the thickness 32 of the lustrous material is preferably 0.05 µm or more and 1.00 µm or less, more preferably 0.10 µm or more and 0.80 µm or less, and still more preferably 0.10 µm or more and 0.50 µm or less.

The ratio of the particle diameter 34 (D₅₀) of the lustrous material to the thickness 32 of the lustrous material (= particle diameter/thickness) is preferably 3 or more and 200 or less, more preferably 5 or more and 150 or less, still more preferably 8 or more and 120 or less, and even more preferably 10 or more and 100 or less.

Fluororesins have the property of aggregating easily. When the fluororesin aggregates, the fluororesin easily forms a fine particle-like shape (hereinafter, referred to as aggregates). The aggregates tend to have poor compatibility with other resin components and inhibit the uniform presence of the fluororesin. Even if the aggregates are pulverized and then stirred with, for example, a thermoplastic resin, reaggregation occurs in the resin composition, resulting in a non-uniformly dispersed resin composition. When the resin component is applied, the aggregates tend to be non-uniformly present on the application surface. In such a non-uniform state, the characteristics of the fluororesin cannot be fully exhibited. To inhibit the growth of the aggregates, a method for adding a nucleating agent, which will be described below, is known. The addition of the nucleating agent is effective in inhibiting an increase in particle diameter even if the aggregates are formed. However, increasing the amount of the nucleating agent added leads to a decrease in weather resistance and formability. The lustrous material is added to improve the design property. When the lustrous material is used in combination with the fluororesin, the effect of inhibiting the growth of the aggregates of the fluororesin has been found. Furthermore, since the fluororesin improves the dispersibility of the lustrous material, the use of both the fluororesin and the lustrous material produces a synergistic effect, resulting in a uniform layer structure of the lustrous resin layer.

The total amount of the lustrous material contained, based on 100 parts by mass of the resin component in the lustrous resin layer, is preferably 0.10 parts or more by mass, more preferably 0.30 parts or more by mass, still more preferably 0.50 parts or more by mass, and even more preferably 0.70 parts or more by mass, in order to mask the article and express the metallic design, and is preferably 30.00 parts or less by mass, more preferably 25.00 parts or less by mass, still more preferably 20.00 parts or less by mass, and even more preferably 18.00 parts or less by mass, in order to express excellent millimeter-wave transparency.

In order to achieve a good metallic design property and millimeter-wave transparency, the amount is preferably 0.10 parts or more by mass and 30.00 parts or less by mass, more preferably 0.50 parts or more by mass and 10.00 parts or less by mass, still more preferably 1.00 parts or more by mass and 8.00 parts or less by mass, and even more preferably 1.50 parts or more by mass and 6.00 parts or less by mass.

In particular, when attention is focused on millimeter-wave transparency, the amount is preferably 0.10 parts or more by mass and 10.00 parts or less by mass, more preferably 0.50 parts or more by mass and 8.00 parts or less by mass, still more preferably 1.00 parts or more by mass and 6.00 parts or less by mass, and even more preferably 1.50 parts or more by mass and 5.00 parts or less by mass.

The surface of the lustrous material may be coated. The coating may be a coating made of an organic substance, such as a silicone, or a coating made of an inorganic substance, such as silica gel or alumina.

### <<Other Components>>

As the other components, for example, a nucleating agent, an ultraviolet absorber, an antioxidant, a colorant, an antistatic agent, a leveling agent, a defoamer, etc. may be used as necessary.

### (Nucleating Agent)

The use of the nucleating agent is preferred because it allows the crystal diameter of the lustrous resin layer to be controlled. Fluororesins are crystalline resins and are known to crystallize in resin layers. When crystals are formed in the resin layer and the crystal size increases, the resin layer may become cloudy due to scattering by the crystals. The use of the nucleating agent is preferable because it can reduce the crystal size. The nucleating agent can be selected from various types in accordance with the resin component used. The use of an acrylic-modified polytetrafluoroethylene is preferable because this makes it possible to control the crystal size of the fluororesin.

### (Colorant)

The colorant contained in the first colorant-containing adhesive layer is one that is commonly used in the technical field of the present invention, and is not particularly limited as long as it allows the metallic decorative laminate to express the desired metallic design. The colorant may be a dye or pigment, an inorganic compound or an organic compound, or a natural or synthetic colorant as long as it absorbs visible light. In particular, when weather resistance is required for outdoor use, a synthetic pigment is preferred. More specific preferred examples thereof include inorganic pigments, such as titanium white, zinc white, red iron oxide, vermilion, ultramarine, cobalt blue, titanium yellow, chrome yellow, and carbon black; and organic pigments (including dyes), such as isoindolinone, Hansa Yellow A, quinacridone, permanent red 4R, phthalocyanine blue, indanthrene blue RS, and aniline black.

The total amount of the colorant contained in the lustrous resin layer is preferably 0.1 parts or more by mass and 10.0 parts or less by mass, more preferably 0.2 parts or more by mass and 5.0 parts or less by mass, still more preferably 0.3 parts or more by mass and 4.0 parts or less by mass, and even more preferably 0.4 parts or more by mass and 3.0 parts or less by mass, based on a total of 100 parts by mass of the amount of the resin component contained.

As the ultraviolet absorber, antioxidant, pigment, antistatic agent, leveling agent, and defoamer, commonly used compounds can be employed. As the ultraviolet absorber, a benzotriazole-based compound is preferred.

### <Other Resin Layers>

As the other resin layers, a surface protective layer, a primer layer, an adhesive layer, and the like, may be included, as needed.

As the surface protective layer and the primer layer, commonly used films made of, for example, a urethane resin, a polyester resin, an acrylic resin, an acrylic urethane resin, or a vinyl chloride-vinyl acetate copolymer resin can be used. The adhesive layer is preferably a polyurethane-based adhesive layer in order to obtain sufficient transparency and adhesive strength.

### [Metallic Article]

The metallic article of the present embodiment is required to be a metallic article including the metallic decorative laminate.

For example, it is manufactured using the metallic decorative laminate by a manufacturing method described below, and is formed into a desired shape in accordance with the purpose. For example, it can be used in the housings and decorative parts of smartphones and mobile phones, automotive bumpers, emblems, door mirror housings, front grilles, door handles, center wheel caps, emblems, ornaments, garnishes, lamp reflectors, center consoles, installation panels, etc., housings and decorative parts of personal computers, television sets, and home appliances, housings and decorative parts of pachinko, pachislot, game machines, etc., or for general-purpose items such as wheeled bags and suitcases, and can impart metallic decorative and design properties in place of plating or metal materials.

In particular, the metallic decorative laminate of the present embodiment not only imparts the metallic design to an article, but also has excellent millimeter-wave transparency. Thus, even when the metallic decorative laminate is disposed between a millimeter-wave radar and an object to be detected, the metallic decorative laminate can transmit the millimeter waves emitted from the millimeter-wave radar and reflected from the object. Therefore, the metallic decorative laminate is preferably used as a bumper or emblem for an automobile. For example, if the metallic decorative laminate is used for an automotive bumper, a millimeter-wave radar can be disposed on the inside of the bumper facing the automobile. This enables the placement of the millimeter-wave radar in a portion that is not visible from the outside of the automobile, thereby providing design flexibility for the automobile. The design property and millimeter-wave transparency are the same as those described for the metallic decorative laminate of the present embodiment, and thus are omitted here.

The metallic article of the present embodiment may have other configurations in addition to the above configurations. For example, in order to maintain the surfaces of the protective layer and the substrate layer in a clean condition and to inhibit the adhesion of dirt until the metallic articles of the present embodiment are used, release paper or a protective laminate can be disposed on the surfaces of the protective layer and the substrate layer.

### [Method for Manufacturing Metallic Decorative Laminate]

A method for manufacturing a metallic decorative laminate of the present embodiment is required to be a method for manufacturing the metallic decorative laminate, the method including, in sequence, applying a coating liquid containing the fluororesins, the acrylic resins, and the lustrous material to a substrate, and performing heating.

### <Applying>

The coating liquid containing the fluororesins, the acrylic resins, and the lustrous material is applied to the substrate described below. The fluororesins, the acrylic resins, and the lustrous material are as described above, and therefore are omitted here.

The coating liquid is only required to contain the fluororesins, the acrylic resins, and the lustrous material. The coating liquid may further contain the other components and a solvent, as needed. The coating liquid contains the lustrous material; hence, the coating liquid is not a homogeneous solution but a slurry containing the lustrous material.

The applying can be performed by applying the coating liquid to the substrate with known means, such as a gravure coater, a reverse coater, a die coater, a knife coater, or a roll coater.

### (Solvent)

The solvent may be any solvent commonly used in the relevant field. The solvent may be selected from polar solvents, such as ester-based solvents, ether-based solvents, and ketone-based solvents; nonpolar solvents, such as hydrocarbon-based solvents and aromatic solvents; and alcoholic solvents, such as methanol, ethanol, and isopropyl alcohol. Polar solvents, such as ester-based solvents, ether-based solvents, and ketone-based solvents, are preferred.

In the method for manufacturing the metallic decorative laminate of the present embodiment, the solvent preferably exhibits poor solvent properties for the fluororesin and good solvent properties for the acrylic resin. When the fluororesin is not dissolved in the coating liquid before heating described below, it does not react with the acrylic resin before heating, and lumps of the reaction product of the fluororesin and the acrylic resin are not formed in the coating liquid, which is preferable. Since no such lumps are formed, uneven coating does not occur during application, and a uniform lustrous resin layer can be manufactured. A preferred example of a solvent having such properties is butyl carbitol acetate.

When the solvent is used, in order to reduce the heating treatment time described below and improve the coatability of the coating liquid to the substrate, the amount of the solvent is preferably 80.0 parts or more by mass and 500.0 parts or less by mass, more preferably 100.0 parts or more by mass and 300.0 parts or less by mass, and still more preferably 150.0 parts or more by mass and 200.0 parts or less by mass, based on 100 parts by mass of the total amount of the fluororesins and the acrylic resins.

### (Substrate)

As the substrate, any substrate that is used in the relevant technical field can be employed. The substrate can be appropriately selected from, for example, polyethylene-based substrates, polyester-based substrates (including polyethylene terephthalate (PET) substrates), and polycarbonate-based substrates. The thickness of the substrate may be any thickness as long as it does not interfere with the manufacturing process; however, typically the substrate that can be used has a thickness of 10 µm or more and 500 µm or less.

### <Heating>

The heating may be started before the coating is finished or after the coating is completely finished; however, the heating is preferably performed while the coating liquid is still present on the substrate. The heating also includes the case where the substrate is preheated, the applying is then performed, and further heating is performed.

When the solvent is used in the coating liquid, the solvent is removed by the heating. When the resin component is heated to a temperature higher than or equal to Tg of the acrylic resins contained therein, mixing with the fluororesins can be performed. This is preferable because the crystal size of the fluororesin does not increase, the precipitation of the fluororesin from the resin component is inhibited, and the lustrous material is uniformly dispersed.

The heating temperature can be appropriately selected in accordance with, for example, the heating time, the fluororesins, the acrylic resins, the solvent, and the substrate used. To obtain the metallic decorative laminate having an excellent design property and excellent millimeter-wave transparency, the heating temperature is preferably 80°C or higher, more preferably 100°C or higher, and still more preferably 110°C or higher, and is preferably 200°C or lower, more preferably 150°C or lower, and still more preferably 130°C or lower.

A heating method can be appropriately selected from heating methods used in the relevant field in accordance with the shape, size, etc. of the object to be heated.

The heating time can be appropriately selected in accordance with, for example, the size of the metallic decorative laminate to be manufactured, the heating temperature, the fluororesins, the acrylic resins, the solvent, and the substrate used. To obtain the metallic decorative laminate with an excellent design property and excellent millimeter-wave transparency, the heating time is preferably 30 seconds or more, more preferably 1 minute or more, and preferably 5 minutes or less, more preferably 3 minutes or less.

### <Peeling Substrate>

Preferably, the method for manufacturing the metallic decorative laminate of the present embodiment further includes peeling off the substrate after the heating.

The metallic decorative laminate manufactured by the method for manufacturing the metallic decorative laminate is formed on the substrate. Therefore, the metallic decorative laminate of the present embodiment is obtained by peeling the metallic decorative laminate manufactured by the heating from the substrate.

A peeling method is not particularly limited as long as it is a method commonly used in the relevant field.

### [Method for Manufacturing Metallic Article]

The metallic article of the present embodiment can be manufactured, for example, by the following method.

The method includes a formation step of increasing the surface temperature of the metallic decorative laminate to 150°C to 200°C, bringing the metallic decorative laminate into close contact with a mold, and forming the metallic decorative laminate onto the surface of the article to provide a metallic article.

### (Formation Step)

To perform the thermoforming of the metallic decorative laminate, the surface temperature of the metallic decorative laminate is set to 150°C to 200°C, so that the metallic decorative laminate does not draw down during forming, and whitening phenomenon does not occur, thereby making it possible to satisfy good formability. With the surface temperature being 150°C or higher, the metallic decorative laminate is sufficiently softened. Therefore, no difficulty in processing or forming caused by sagging or deformation of the metallic decorative laminate due to the draw-down phenomenon occurs. With the surface temperature being 200°C or lower, it is possible to inhibit cases where the metallic decorative laminate is too soft and difficult to form due to a molten state, or where phenomena, such as whitening, are likely to occur.

The shape of the mold with which the metallic decorative laminate is brought into close contact can be any shape so that the metallic article can be formed into a desired shape. For example, a mold, such as a male mold or a female mold, having a chrome-plated brass surface can be used. The temperature of the mold can be set to any desired temperature in consideration of control of the surface temperature of the metallic decorative laminate and control of the cooling conditions of the metallic article after the formation step.

As a method for bringing the metallic decorative laminate into close contact with the mold, any method can be used in consideration of ease of forming, cost, etc., such as straight forming using a female mold, drape forming using a male mold, and plug-assisted forming using a plug (auxiliary mold). In addition, a vacuum forming method can be used in which the metallic decorative laminate is sucked to a mold, or an air-pressure forming method can be used in which the metallic decorative laminate is brought into close contact with a mold by using compressed air pressure. For example, by bringing the metallic decorative laminate into close contact with a mold using vacuum and/or compressed air, the adhesion between the metallic decorative laminate and the mold is improved, allowing it to be processed into a more precise shape.

### (Clamping Step)

The method for manufacturing a metallic article can include a clamping step of clamping the metallic decorative laminate prior to the formation step. This step allows the metallic decorative laminate to be adjusted and fixed in such a manner that the metallic decorative laminate does not loosen during forming. The clamping can be performed, for example, by gripping both ends of the metallic decorative laminate using multiple holding means that can grip both surfaces of the metallic decorative laminate. Gripping of the metallic decorative laminate is not limited to both ends of the metallic decorative laminate, but any portion of the metallic decorative laminate can be gripped. Usually, both end portions of the metallic decorative laminate in the width direction can be gripped for continuous production of the metallic article. In the case of the batch production of the metallic article using a rectangular piece of the metallic decorative laminate cut to a predetermined length, the four end portions can be gripped by upper and lower frames.

### (Heating Step)

The method for manufacturing a metallic article can include a heating step of heating the metallic decorative laminate after the clamping step. For example, after the metallic decorative laminate at room temperature is clamped and adjusted so as not to slacken, multiple heaters or the like can be used as heating means, and these heaters or the like can be arranged above and below the metallic decorative laminate, so that both surfaces of the metallic decorative laminate can be uniformly heated at the same time. By this heating step, the surface temperature of the metallic decorative laminate can be controlled to 150°C to 200°C.

### (Other Steps)

The method for manufacturing a metallic article may further include other steps in addition to the steps described above. For example, the method may include a bonding step of bonding a protective film or the like to the surface of the protective layer or the substrate layer in order to maintain the surfaces of the protective layer or the substrate layer in a clean condition and to inhibit the adhesion of dirt until the metallic article is processed in the next step. Furthermore, the surface of an injection molded product can be decorated by insert injection molding in which the metallic article is inserted into an injection mold and then a resin is injected.

The metallic decorative laminate of the present embodiment, the metallic article including the metallic decorative laminate of the present embodiment, and the method for manufacturing the metallic decorative laminate of the present embodiment are preferably as described in [1] to [13] below.
[1] A metallic decorative laminate includes a lustrous resin layer that contains a resin component containing one or two or more fluororesins and one or two or more acrylic resins and that contains one or two or more lustrous materials, wherein the lustrous resin layer has a layer thickness of 20 µm or more and 100 µm or less.
[2] In the metallic decorative laminate described in [1], the lustrous material contains at least one material selected from scale-like or flake-like metals, scale-like or flake-like alloys, scale-like or flake-like metal oxides, scale-like or flake-like micas, glass flakes, and pulverized film pieces.
[3] In the metallic decorative laminate described in [1] or [2], the lustrous material has a particle diameter of 3 µm or more and 50 µm or less.
[4] In the metallic decorative laminate described in any one of [1] to [3], the lustrous material has a thickness of 0.05 µm or more and 1.00 µm or less.
[5] In the metallic decorative laminate described in any one of [1]to [4], a surface of the lustrous material is coated.
[6] In the metallic decorative laminate described in any one of [1] to [5], the lustrous material in the lustrous resin layer is in an amount of 0.10 parts or more by mass and 30.00 parts or less by mass based on a total of 100 parts by mass of the resin component.
[7] In the metallic decorative laminate described in any one of [1] to [6], the acrylic resin has a glass transition temperature (Tg) of 100°C or higher.
[8] In the metallic decorative laminate described in any one of [1] to [7], the acrylic resin contains an imide skeleton.
[9] In the metallic decorative laminate described in any one of [1] to [8], the ratio of the amount of the fluororesin contained to the amount of the acrylic resin contained in the resin component (the amount of the fluororesin/the amount of the acrylic raw resin) is 1.0 or more and 5.0 or less.
[10] In the metallic decorative laminate described in any one of [1] to [9], the lustrous resin layer is only one layer.
[11] A metallic article includes the metallic decorative laminate described in any one of [1] to [10].
[12] A method for manufacturing the metallic decorative laminate described in any one of [1] to [10] includes, in sequence:
   applying a coating liquid containing a fluororesin, an acrylic resin, and a lustrous material to a substrate; and performing heating.
[13] In the method for manufacturing the metallic decorative laminate described in [12] further includes peeling the substrate after the heating.

### EXAMPLES

The present invention will now be described in more detail with reference to examples. However, the present invention is not limited to the following examples.

### (Evaluation Method)

### 1. Millimeter-Wave Transparency (Transmission Loss)

The millimeter-wave transmission loss of a metallic multilayer laminate 100 at a frequency of 76.5 GHz was measured using RAS (SM5899) manufactured by KEYCOM Corporation. A metallic decorative laminate was set in the device so that millimeter waves would pass from the surface 21 of the lustrous resin layer remote from an article to the surface 22 of the lustrous resin layer adjacent to the article in Fig. 3. The measurement was performed 250 times, and the average of the absolute values of the 250 measured values was defined as the transmission loss (dB). The millimeter-wave transparency was evaluated as "A" if it was excellent (2 dB or less), "B" if it was at a level that was acceptable for practical use (less than 5 dB), and "C" if it did not have sufficient millimeter-wave transparency (5.00 dB or more). A and B were determined to be acceptable, and C was determined to be unacceptable.

### 2. Substrate Releasability

A 20 cm × 20 cm piece was cut from each of the substrates before peeling, which are described below and were obtained in the examples and a comparative example, preparing a substrate releasability test sample. A portion of the metallic decorative laminate was peeled from one corner of the substrate releasability test sample. The peeled portion was then gripped, and peeling was performed toward the diagonally opposite corner. The peeled metallic decorative laminate was visually observed. If no defects were found, it was evaluated as "A". If any defects were found, it was evaluated as "C". A was determined to be acceptable, and C was determined to be unacceptable.

### 3. Appearance Evaluation Before Forming

The metallic decorative laminates obtained in the examples and the comparative example were visually observed. If they exhibited a metallic design, they were evaluated as "A". If they did not exhibit a metallic design or had a matte finish, they were evaluated as "C". A was determined to be acceptable, and C was determined to be unacceptable.

### 4. Appearance Evaluation After Forming

Metallic articles formed using the metallic decorative laminates obtained in the examples and the comparative example were visually observed. If a metallic design was present, it was evaluated as "A". If there was no problem in practical use but the metallic design was inferior to that of a metallic decorative laminate evaluated as "A", it was evaluated as "B". If the metallic design was not exhibited or if it had a matte finish, it was evaluated as "C". A and B were determined to be acceptable, and C was determined to be unacceptable.

### 5. Total Light Transmittance

The total light transmittance was measured using a spectrophotometer (UH4150, manufactured by Hitachi High-Tech Science Corporation) in accordance with JIS K7375:2008.

### 6. Method for Measuring Molecular Weight

The number-average molecular weight (Mn), the weight-average molecular weight (Mw), the average molecular weight (Mz), and the polydispersity (Mw/Mn) of each of a fluororesin and an acrylic resin used in the examples and the comparative example were determined as described below.

Tetrahydrofuran (THF) was added to an object to be measured to adjust the concentration to 2 mg/mL. The resulting solution was filtered through a membrane filter (PTFE, pore size: 0.45 µm), and the filtrate was subjected to molecular weight measurement by size exclusion chromatography (SEC). The measurement conditions by SEC are described below.
Apparatus: size exclusion chromatograph (HLC-8320GPC, manufactured by Tosoh Corporation)
Eluent: tetrahydrofuran (free of stabilizer)
Column: TSKgel SuperHM-M (two columns in series)
Detector: differential refractometer
Measurement temperature: 40°C
Flow rate: 0.6 mL/min
Injection volume: 20 µL
Molecular weight calculation conditions
Relative molecular weight values were calculated in terms of standard substances.
Standard substance: 12 standard polystyrenes (molecular weights from 504 to 1.09 × 10⁶)
Calibration curve: third-order approximation curve (Acrylic resin (SK540, manufactured by Asahi Kasei Corporation))
Number-average molecular weight (Mn): 46,000
Weight-average molecular weight (Mw): 93,000
Z-average molecular weight (Mz): 150,000
Polydispersity (Mw/Mn): 2.0
Peak area ratio: 86%
(Fluororesin (Kyanr 301, manufactured by Arkema K.K.)) Number-average molecular weight (Mn): 1,200
Weight-average molecular weight (Mw): 1,600
Z-average molecular weight (Mz): 1,900
Polydispersity (Mw/Mn): 1.3
Peak area ratio: 14%

### (Example 1)

### (Manufacture of Metallic Decorative Laminate)

A coating liquid described below was applied to a substrate (PET film (G2000 (manufactured by Toyobo Co., Ltd.))). The amount of coating applied was adjusted in such a manner that the thickness of the lustrous resin layer after heating was 30 um.

Immediately after application, the substrate was heated at 120°C for 2 minutes to form a lustrous resin layer on the substrate (substrate before peeling). The substrate before peeling was cooled to room temperature, and the substrate was peeled off to manufacture a metallic decorative laminate.

### (Coating Liquid (1))

First, 8.75 g of an acrylic resin (SK540, manufactured by Asahi Kasei Corporation) was added to 37.45 g of butyl carbitol acetate (manufactured by Sankyo Kasei Sangyo Co., Ltd.), and the mixture was stirred at room temperature to prepare a homogeneous solution. Furthermore, 0.57 g of an ultraviolet absorber (Tinuvin 900, manufactured by Asahi Kasei Corporation), 0.06 g of a nucleating agent (A-3000, manufactured by Mitsubishi Chemical Corporation), 13.16 g of a fluororesin (Kyanr 301, manufactured by Arkema K.K.), and aluminum flakes, serving as a lustrous material, described in Table 1 (trade name: FD5060, manufactured by Asahi Kasei Corporation) in an amount (g) given in Table 1 were added thereto. The mixture was further stirred to prepare a coating liquid (1).

Table 1 presents the product code, the particle diameter (µm), and the thickness (µm) of the aluminum flakes.

### (Manufacture of Metallic Article)

Using a pressure-forming machine, after clamping a metallic decorative laminate, the laminate was preformed at a preforming temperature of 200°C with an air pressure of 6 bar so as to fit into an injection mold. The excess portions protruding beyond the mold were trimmed to obtain a metallic article.

Table 3 summarizes the results of the substrate releasability, transmission loss (dB), and the appearance evaluation before forming of the resulting metallic decorative laminate, and the appearance evaluation after forming of the metallic article.

In the table, the unit of transmission loss is dB as described above, and "A", "B", and "C" represent the above-described meanings.

### (Example 2) to (Example 10)

Metallic decorative laminates of Examples 2 to 10 were manufactured in the same manner as in Example 1, except that the lustrous material (aluminum flakes, all of the aluminum flakes listed in Table 1 were manufactured by Asahi Kasei Corporation) and the amount thereof in the coating liquid (1) were changed to those listed in Tables 1 and 3.

Tables 2 and 4 summarize the results of the substrate releasability, the transmission loss, and the appearance evaluation before forming of the resulting metallic decorative laminates, and the appearance evaluation after forming of the metallic articles.

### (Comparative Example 1)

A metallic decorative laminate of Comparative Example 1 was manufactured in the same manner as in Example 1, except that a fluororesin was not used in the coating liquid of Example 1.

Table 4 summarizes the results of the substrate releasability, the transmission loss, and the appearance evaluation before forming of the resulting metallic decorative laminate, and the appearance evaluation after forming of the metallic article.

**[Table 1]**

| Aluminum flake | | | Example | | | | | |
|---|---|---|---|---|---|---|---|---|
| Product code | Particle diameter | Thickness | 1 | 2 | 3 | 4 | 5 | 6 |
| FD5060 | 6.0 | 0.12 | 4.50 | | | | | |
| GX4100 | 10.0 | 0.16 | | 4.50 | | | | |
| PVH5060 | 6.0 | 0.12 | | | 3.75 | | | |
| PVM4100 | 10.0 | 0.16 | | | | 5.25 | 4.50 | 3.75 |
| MH8801 | 15.0 | 0.18 | | | | | | |
| GX40A | 19.0 | 0.36 | | | | | | |

**[Table 2]**

| | | Example | | | | | |
|---|---|---|---|---|---|---|---|
| | | 1 | 2 | 3 | 4 | 5 | 6 |
| Millimeter-wave transparency | Transmission loss | 0.57 | 0.26 | 0.25 | 1.30 | 0.23 | 0.23 |
| | Evaluation | A | A | A | A | A | A |
| Substrate releasability | | A | A | A | A | A | A |
| appearance evaluation before forming | | A | A | A | A | A | A |
| appearance evaluation after forming | | A | A | A | A | A | A |

**[Table 3]**

| Aluminum flake | | | Example | | | | Comparative Example |
|---|---|---|---|---|---|---|---|
| Product code | Particle diameter | Thickness | 7 | 8 | 9 | 10 | 1 |
| FD5060 | 6.0 | 0.12 | | | | | 4.50 |
| GX4100 | 10.0 | 0.16 | | | | | |
| PVH5060 | 6.0 | 0.12 | | | | | |
| PVM4100 | 10.0 | 0.16 | | | | | |
| MH8801 | 15.0 | 0.18 | 6.00 | 5.25 | | 4.00 | |
| GX40A | 19.0 | 0.36 | | | 4.50 | | |

**[Table 4]**

| | | Example | | | | Comparative Example |
|---|---|---|---|---|---|---|
| | | 7 | 8 | 9 | 10 | 1 |
| Millimeter-wave transparency | Transmission loss | 2.42 | 0.55 | 1.00 | 0.24 | 5.29 |
| | Evaluation | B | A | A | A | C |
| Substrate releasability | | A | A | A | A | C |
| Appearance evaluation before forming | | A | A | A | A | C |
| Appearance evaluation after forming | | B | B | B | B | C |

### (Example 11) to (Example 13)

Metallic decorative laminates of Examples 11 to 13 were manufactured in the same manner as in Example 1, except that a coating liquid (2) described below was used.

Table 6 summarizes the results of the substrate releasability, the transmission loss, and the appearance evaluation before forming of the resulting metallic decorative laminates, and the appearance evaluation after forming of the metallic articles.

### (Coating Liquid (2))

First, 8.75 g of an acrylic resin (SK540, manufactured by Asahi Kasei Corporation) was added to 37.45 g of butyl carbitol acetate (manufactured by Sankyo Kasei Sangyo Co., Ltd.), and the mixture was stirred at room temperature to prepare a homogeneous solution. Furthermore, 0.57 g of an ultraviolet absorber (Tinuvin 900, manufactured by Asahi Kasei Corporation), 0.06 g of a nucleating agent (A-3000, manufactured by Mitsubishi Chemical Corporation), 13.16 g of a fluororesin (Kyanr 301, manufactured by Arkema K.K.), synthetic mica pearl serving as a lustrous material (trade name: SC-100ST, manufactured by Nihon Koken Kogyo Co., Ltd., particle diameter: 22 µm) in an amount (g) given in Table 5, and MHI White #148 serving as a colorant (manufactured by Mikuni-Color Ltd.) in an amount (g) given in Table 5 were added thereto. The mixture was further stirred to prepare a coating liquid (2).

**[Table 5]**

| | Example | | |
|---|---|---|---|
| Product code | 11 | 12 | 13 |
| SC-100ST | 1.50 | 1.50 | 1.50 |
| MHI White #148 | 2.00 | 1.00 | 0.50 |

**[Table 6]**

| | Example | | |
|---|---|---|---|
| | 11 | 12 | 13 |
| Millimeter-wave transparency | A | A | A |
| Substrate releasability | A | A | A |
| Appearance evaluation before forming | A | A | A |
| Appearance evaluation after forming | A | A | A |

The results of Examples 1 to 13 presented in Tables 2, 4, and 6 indicated that the metallic decorative laminates each exhibited a metallic design and excellent millimeter-wave transparency. They also exhibited excellent substrate releasability and excellent film formability. Furthermore, all the metallic articles were found to be practically free of any issues.

In contrast, it was found that the metallic decorative laminate of Comparative Example 1 was inferior in the design property and millimeter-wave transparency to the metallic decorative laminates of the present embodiment. The substrate releasability was also found to be inferior. It was also found that the metallic article including the metallic decorative laminate of Comparative Example 1 also had an inferior design property.

### Industrial Applicability

The metallic decorative laminate of the present embodiment and the metallic article including the metallic decorative laminate of the present embodiment exhibit an excellent metallic design and excellent millimeter-wave transparency and are easily manufactured. Furthermore, the metallic decorative laminate can be easily manufactured by the method for manufacturing the metallic decorative laminate of the present embodiment.

The metallic decorative laminate of the present embodiment is suitably used for resin components, such as automotive bumpers.

### Reference Signs List

- 1: thickness direction
- 2: width direction
- 3: longitudinal direction
- 10: metallic decorative laminate
- 20: lustrous resin layer
- 21: surface of lustrous resin layer remote from article
- 22: surface of lustrous resin layer adjacent to article
- 30: lustrous material
- 31: thickness direction of lustrous material
- 32: thickness of lustrous material
- 33: particle-diameter direction of lustrous material
- 34: particle diameter of lustrous material
- 100: milli-transparent lustrous coating resin product
- 110: lustrous resin layer (1)
- 111: lustrous resin layer (2)
- 112: lustrous resin layer (3)
- 120: lustrous material
- 121: region having low lustrous material content
- 122: region having high lustrous material content
- 130: resin substrate

## Claims

1. A metallic decorative laminate, comprising a lustrous resin layer that contains a resin component containing one or two or more fluororesins and one or two or more acrylic resins and that contains one or two or more lustrous materials, wherein the lustrous resin layer has a layer thickness of 20 µm or more and 100 µm or less.

2. The metallic decorative laminate according to claim 1, wherein the lustrous material contains at least one material selected from scale-like or flake-like metals, scale-like or flake-like alloys, scale-like or flake-like metal oxides, scale-like or flake-like micas, glass flakes, and pulverized film pieces.

3. The metallic decorative laminate according to claim 1 or 2, wherein the lustrous material has a particle diameter of 3 µm or more and 50 µm or less.

4. The metallic decorative laminate according to any one of claims 1 to 3, wherein the lustrous material has a thickness of 0.05 µm or more and 1.00 µm or less.

5. The metallic decorative laminate according to any one of claims 1 to 4, wherein a surface of the lustrous material is coated.

6. The metallic decorative laminate according to any one of claims 1 to 5, wherein the lustrous material in the lustrous resin layer is in an amount of 0.10 parts or more by mass and 30.00 parts or less by mass based on a total of 100 parts by mass of the resin component.

7. The metallic decorative laminate according to any one of claims 1 to 6, wherein the acrylic resins have a glass transition temperature (Tg) of 100°C or higher.

8. The metallic decorative laminate according to any one of claims 1 to 7, wherein the acrylic resins contain an imide skeleton.

9. The metallic decorative laminate according to any one of claims 1 to 8, wherein a ratio of an amount of the fluororesins contained to an amount of the acrylic resins contained in the resin component (the amount of the fluororesins/the amount of the acrylic raw resins) is 1.0 or more and 5.0 or less.

10. The metallic decorative laminate according to any one of claims 1 to 9, wherein the lustrous resin layer is only one layer.

11. A metallic article, comprising the metallic decorative laminate according to any one of claims 1 to 10.

12. A method for manufacturing the metallic decorative laminate according to any one of claims 1 to 10, comprising, in sequence:
applying a coating liquid containing a fluororesin, an acrylic resin, and a lustrous material to a substrate; and performing heating.

13. The method for manufacturing the metallic decorative laminate according to claim 12, further comprising peeling the substrate after the heating.
